# EUROPÄISCHE PATENTSCHRIFT

(11) **EP 1 812 337 B1**
(45) Veröffentlichungstag und Bekanntmachung des Hinweises auf die Patenterteilung: **18.01.2017**
(21) Anmeldenummer: 05810928.1
(22) Anmeldetag: 12.11.2005
(51) Int. Cl.: C01B 3/38

(54) **MISCHKAMMER FÜR EINEN REFORMER SOWIE VERFAHREN ZUM BETREIBEN EINER MISCHKAMMER**
REFORMER MIXING CHAMBER AND METHOD FOR THE OPERATION A MIXING CHAMBER
CHAMBRE DE MELANGE POUR REFORMEUR ET PROCEDE POUR OPÉRER UNE CHAMBRE DE MELANGE

(30) Priorität: 17.11.2004 DE 102004055426
(43) Veröffentlichungstag der Anmeldung: 01.08.2007
(73) Patentinhaber: Forschungszentrum Jülich GmbH, 52425 Jülich (DE)
(72) Erfinder: PETERS, Ralf, 52146 Würselen (DE); CREMER, Paul, 50181 Bedburg (DE); PASEL, Joachim, 52428 Jülich (DE); PORS, Zdenek, 52428 Jülich (DE); STOLTEN, Detlef, 52076 Aachen (DE)
(86) Internationale Anmeldenummer: PCT/DE2005/002043
(87) Internationale Veröffentlichungsnummer: WO 2006/053535

(56) Entgegenhaltungen:
- EP-A- 1 284 235
- DE-A1- 1 667 628
- DE-A1- 2 117 236
- DE-A1- 10 127 785
- GB-A- 1 198 189

## Beschreibung

Die Erfindung betrifft eine effektive Mischkammer für einen Reformer, insbesondere für einen Reformer zur Erzeugung von Mitteldestillaten, sowie ein Verfahren zum Betreiben einer Mischkammer.

### Stand der Technik

Neben der klassischen Dampfreformierung zur Wasserstoffproduktion stellt die autotherme Reformierung eine vielversprechende Alternative dar. Dabei reagiert ein Sauerstoff-Wasser-Gemisch im Reaktor ohne externe Wärmequelle mit Kohlenwasserstoff CₘHₙ entsprechend folgender Gleichungen:

CₙHₘ + n H₂O → n CO + (m/2 + n) H₂ ΔH_{R} > 0 (Dampfreformierung)

CₙHₘ + n/2 O₂ → m/2 H₂ + n CO ΔH_{R} > 0 (partielle Oxidation)

Für Methan CH₄ (n = 1, m = 4) stellen sich die Reaktionsgleichungen wie folgt dar:

CH₄ + H₂O => CO + 3H₂ ΔH_{R} = + 206 kJ/mol

CH₄ + 0,5 O₂ => CO + 2H₂ ΔH_{R} = - 35 kJ/mol

Der Sauerstoff wird in der Regel mittels Luft bereitgestellt. Die Wärme, die für die Dampfreformierung notwendig ist, wird durch die partielle Oxidation des Kohlenwasserstoffs zur Verfügung gestellt. Der Prozess kann somit in einem autothermen Betriebsmodus gefahren werden. Prinzipiell ist ein höherer Wirkungsgrad möglich, da systembezogene Enthalpieverluste nur durch den warmen Produktgasstrom möglich sind. Besonders für den Gebrauch von Brennstoffzellensystemen als Fahrzeugantrieb mit Benzin oder Diesel als Kraftstoff erscheint die autotherme Reformierung sehr viel versprechend. Dies ist durch die hohe Reaktionstemperatur (ca. 800 °C) und eine gute Reaktionskinetik zu erklären.

Neben der Entwicklung von geeigneten Katalysatoren für die autotherme Reformierung von Mitteldestillaten hängt die Einsatzfähigkeit eines Reformers wesentlich davon ab, ob optimierte Betriebsbedingungen eingestellt werden können. Die Reformierung von flüssigen Kraftstoffen stellt hohe Ansprüche an die Vorbereitung der Edukte, bevor sie in die Reaktionszone des Reaktors, d. h. des Reformers eintreten.

Eine schlechte Qualität des Eduktgemisches hat regelmäßig eine negative Wirkung auf den Umsatz des Kraftstoffs. Um die Rußbildung und so genannte "Hot Spots" in der Reaktionszone zu vermeiden, ist es insbesondere wichtig, dass die O₂/C-und H₂O/C-Verhältnisse im Gemisch möglichst konstant bleiben und nicht schwanken.

Die Mischkammer eines Reformers hat daher die folgenden Funktionen:
- Zuführung des Kraftstoffes
- Zerstäubung und Verdampfung des Kraftstoffes
- Gemischbildung (Homogenisierung der Kraftstoffkonzentration im Luft/Dampf-Strom)
- Homogenisierung der Durchflussverteilung (Fließgeschwindigkeitsprofil)

Aus dem Stand der Technik sind zwei prinzipielle Möglichkeiten der Kraftstoffzuführung bekannt, die gasförmige Zuführung über einen externen Verdampfer und die interne Einspritzung und Zerstäubung des flüssigen Kraftstoffs.

Eine separate Verdampfung des Kraftstoffs wird dabei häufig bei reinen Stoffen, wie beispielsweise Methanol oder isoOktan angewandt. Bei komplexeren Kraftstoffmischungen wie Benzin oder Diesel steigt die Gefahr, dass sich auf der heißen Oberfläche des Verdampfers kohlenstoffhaltige Ablagerungen bilden und abscheiden. Nachteilig wird bei diesen Verfahren eine zusätzliche externe Wärmequelle benötigt und die Steuerung gestaltet sich aufgrund der Wärmekapazität des Verdampfers regelmäßig schwierig.

Eine direkte Einspritzung des Kraftstoffs erfolgt üblicherweise durch eine Einstoff- oder eine Mehrstoffdüse. Bei einer Einstoffdüse wird der Kraftstoff mit hohem Druck zerstäubt. Beispiele für geeignete Einstoffdüsen sind die kontinuierliche Dralldruckzerstäubungsdüse, wie sie in kleineren Heizkesseln für Heizöl üblich ist, oder der Hochdruckinjektor, wie sie in heutigen Benzin- und Dieselmotoren eingesetzt werden. Auch zu nennen ist das Venturirohr, welches zum Ansaugen und Zerstäuben einer Flüssigkeit dient.

Bei Verwendung einer Mehrstoffdüse wird der Kraftstoff in der Regel zusammen mit einem Gasstrom zerstäubt. Solche Düsen erzeugen sehr feine Tropfen mit einem Durchmesser von ca. 10 bis 30 µm. Es ist auch schon eine Dreistoffdüse bekannt, bei der neben dem flüssigen Kraftstoff und Luft zusätzlich überhitzter Wasserdampf durch die Düse geleitet wird.

Zur vollständigen Verdampfung des zerstäubten Kraftstoffs wird viel Wärme benötigt, die beispielsweise durch einen heißen, gasförmigen Eduktstrom aus Luft und/oder Wasserdampf zugeführt wird. Dabei ist jedoch die Tatsache zu beachten, dass bei bestimmten Bedingungen, die für die Verdampfung benötigte Temperatur des Gasstromes die Zündtemperatur des Kraftstoffs überschritten werden kann.

Alternativ kann die benötigte Wärme auch durch eine teilweise Verbrennung des Kraftstoffs erzielt werden, oder die Mischkammer durch eine externe Heizung erwärmt werden.

Bei allen vorgenannten Verfahren können jedoch durch die Zersetzung des Brennstoffs nachteilig kohlenstoffhaltige Ablagerungen auftreten, die sich insbesondere auf dem Reformierungskatalysator in Form von Ruß abscheiden und so zu einer zunehmend verringerten Aktivität desselben führen.

Aus DE 1 667 628 A1 ist ein Verfahren zur thermischoxidierenden Spaltung von Kohlenwasserstoffen bekannt. Das Verfahren wird in einem zylindrischen Reaktor durchgeführt, an dessen Stirnseiten einander gegenüberliegend die Zuleitung, bzw. die Zuleitungen für das sauerstoffhaltige Vergasungsmittel und die Ableitung für das im Reaktor erzeugte Spaltgases angeordnet sind. Die Kohlenwasserstoffe werden seitlich in den Reaktor und über eine zentral angeordnete Düse eingeführt. Dabei strömen die Kohlenwasserstoffe dem sauerstoffhaltigen Vergasungsmittel entgegen. Weitere Vergasungsmittel wie Wasserdampf oder Kohlendioxid können sowohl über die Zufuhrleitungen für das sauerstoffhaltige Vergasungsmittel als auch über die Zufuhrleitung für die Kohlenwasserstoffe eingeführt werden.

Auch aus DE 2 111 26 A1 ist ein Verfahren zur oxidierenden Spaltung von Kohlenwasserstoffen bekannt, welches in einem ebenfalls zylindrischen Reaktor durchgeführt werden kann, der durch einen konzentrischen, rohrförmigen Einbau in einen inneren Reaktionsraum und in einen äußeren Ringraum unterteilt ist. Die Kohlenwasserstoffe werden über den Boden des Reaktors und der Sauerstoff axial über den Reaktordeckel in den Reaktionsraum eingeführt, so dass eine Gegenströmung entsteht. Das teilweise bereits erzeugte Spaltgas gelangt vom Reaktionsraum am oberen Ende des Reaktors in den äußeren Ringraum und wird durch ggfs. über einen Katalysator zum Boden geleitet und dort teilweise in den Reaktionsraum zurückgeführt und teilweise abgezogen.

### Aufgabe und Lösung

Die Aufgabe der Erfindung ist es, eine besonders effektive Mischkammer für einen Reformer bereit zu stellen, der eine besonders gleichmäßige Verteilung der Edukte und eine Homogenisierung der Durchflussverteilung ermöglicht, und somit besonders effektiv zu betreiben ist. Ferner ist es die Aufgabe der Erfindung, eine Mischkammer bereit zu stellen, die eine unerwünschte Rußbildung weitgehend vermeidet und den Kraftstoff im sich anschließenden Reformer möglichst vollständig umsetzt.

Die Aufgaben der Erfindung werden gelöst durch ein Verfahren zum Betreiben einer Mischkammer mit der Gesamtheit an Merkmalen gemäß Hauptanspruch, sowie durch eine Mischkammer für einen Reformer gemäß Nebenanspruch. Vorteilhafte Ausführungsformen des Verfahrens und der Vorrichtung finden sich in den jeweils darauf rückbezogenen Ansprüchen wieder.

### Gegenstand der Erfindung

Die Erfindung beschreibt eine Mischkammer, in der ein Brennstoff und ein Oxidationsmittel gemischt werden, wobei dieses Gemisch anschließend zur Zuführung zu einem Reformierungskatalysator vorgesehen ist. Eine solche Mischkammer könnte beispielsweise Teil eines autothermen Reformers (ATR) sein. Die erfindungsgemäße Mischkammer für einen Reformer weist eine Zweistoffdüse auf, die für die Zuführung von Kraftstoff und Luft geeignet ist. Ferner weist sie eine Zuführung auf, die für die Zuführung von Wasserdampf vorgesehen ist. Die Zuführung für den Wasserdampf ist derart auf die Zweistoffdüse ausgerichtet, dass der im Betrieb der Mischkammer daraus ausströmende Wasserdampf dem aus der Zweistoffdüse austretenden Kraftstoff-Luft-Gemisch entgegenströmt. Die erzeugten Gas- bzw. Nebelströme verlaufen somit weitgehend entgegengesetzt.

Zur effektiven Strömungsführung innerhalb der Mischkammer ist diese rotationssymmetrisch ausgestaltet, in Form eines Zylinders. Die Zweistoffdüse ist zentral an einer Stirnfläche der Mischkammer angeordnet, so dass sich der aus der Zweistoffdüse parallel zur Achse austretende Strahl gleichmäßig in der Mischkammer verteilen kann.

Die Zuführung von Wasserdampf erfolgt beispielsweise über eine Seitenfläche der Mischkammer, wobei die Zuführung selbst die Strömungsführung möglichst wenig beeinflussen sollte. Eine vorteilhafte Ausgestaltung sieht daher vor, die Zuleitung innerhalb der Mischkammer radial in Richtung der Achse zu führen, und dort in Richtung auf die Zweistoffdüse abknicken zu lassen. Der Auslass der Wasserdampfzuführung und der Auslass der Zweistoffdüse sollten aufeinander gerichtet und insbesondere in einem Winkel von 180 ± 5 ° angeordnet sein.

Die erfindungsgemäße Mischkammer liegt in Form eines Zylinders vor, der in Richtung auf die Zweistoffdüse und optional in Richtung auf den sich anschließenden Katalysator, bzw. in Richtung auf eine Vorkammer des Katalysators eine Verjüngung aufweist. Diese Verjüngung bewirkt vorteilhaft, dass sich außerhalb der eigentlichen Vermischungs- und Verdampfungszone störenden Wirbel regelmäßig deutlich verringern, bzw. ganz verhindern lassen. Insbesondere eine Verjüngung rund um die Zweistoffdüse hat sich als sehr effektiv herausgestellt. Das Verfahren zum Betreiben der erfindungsgemäßen Mischkammer umfasst die Schritte Zuführung des Kraftstoffes und eines Teils der benötigten Luft durch die Zweistoffdüse. Während des stationären Betriebs der Mischkammer weist die Zweistoffdüse eine Temperatur im Bereich von ca. 80 °C bis 140 °C, insbesondere von ca. 120 °C auf. Die durch die Zweistoffdüse geleiteten Edukte Kraftstoff und Luft weisen beim Eintritt in die Mischkammer in der Regel ähnliche Temperaturen wie die Zweistoffdüse auf. Diese Temperaturen sind zu niedrig, um den Kraftstoff komplett zu verdampfen. Er liegt daher in der Mischkammer zunächst in Form feiner Tröpfchen mit einem durchschnittlichen Tropfendurchmesser im Bereich von 10 µm bis 30 µm vor.

Zum Verdampfen des in Tropfen vorliegenden Kraftstoffes wird dieser mit einem in entgegengesetzter Richtung strömenden Wasserdampfstrom vermischt, dem der restliche Luftstrom zugemischt wird. Der Wasserdampf-Luft-Strom wird durch die zweite Zuführung in die Mischkammer geleitet. Der Wasserdampf hat regelmäßig eine Temperatur zwischen 350 °C und 540 °C, insbesondere zwischen 380 °C und 430 °C. Bei diesen Temperaturen kommt es beim Kontakt mit den Kraftstofftröpfchen augenblicklich zur vollständigen Verdampfung des Kraftstoffes. Gleichzeitig wird die Kraftstoffkonzentration im Eduktgasstrom vorteilhaft homogenisiert. Bei geeigneter Geometrie der Mischkammer und des daran angrenzenden Katalysators kann durch diese Maßnahme zusätzlich eine Homogenisierung des Fließgeschwindigkeitsprofils in Richtung des monolithischen Katalysators erzielt werden.

Die erfindungsgemäße Mischkammer eignet sich insbesondere für Kraftstoffe mit einem Siedebereich zwischen 180 °C - 250 °C und geringen Aromaten- und Schwefelgehalten. Diese können insbesondere synthetisch nach dem Fischer-Tropsch-Verfahren oder durch fraktionierte Destillation von Naphtha hergestellt werden.

### Spezieller Beschreibungsteil

Nachfolgend wird der Gegenstand der Erfindung anhand einer Figur und eines Ausführungsbeispiels näher erläutert, ohne dass der Gegenstand der Erfindung dadurch beschränkt wird.

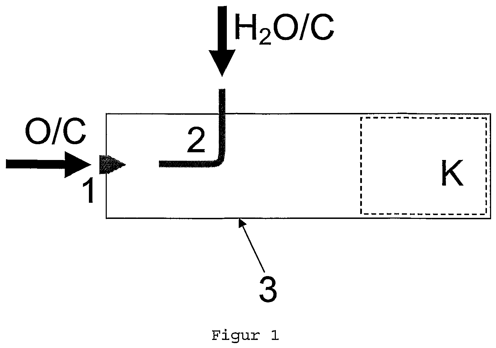

Dabei zeigt die Figur eine Ausführungsform der erfindungsgemäßen Mischkammer 3 mit einer sich daran anschließenden Katalysatoreinrichtung K. Durch eine erste Zweistoffdüse 1 wird der Mischkammer ein Kraftstoff-Luft-Gemisch (C/O) zugeführt. Eine zweite Zuführung 2 ist derart angeordnet, dass das durch sie der Mischkammer zugeführte Wasserdampf-Luft-Gemisch (H₂O/O) nahezu im Gegenstrom auf das austretende Kraftstoff-Luft-Gemisch gerichtet ist.

Die Edukte des Reformators sollten mittels exakter Dosierung, Gemischbildung, möglicherweise Verdampfung und homogener Durchflussverteilung in Richtung des Katalysators zur Verfügung gestellt werden. Dies wird in der erfindungsgemäßen Mischkammer realisiert. Als Beispiel wird für einen ATR mit einer Leistung von 3 kWₑₗ 3,6 kg/h Luft, 1,73 kg/h Wasser und 800 g/h Kraftstoff in die Mischkammer eingeleitet.

In einer ersten Ausgestaltung der Erfindung weist die Mischkammer 3 eine hohlzylindrische Geometrie auf. Der Durchmesser beträgt ca. 50,8 mm und die Länge des keramischen Innenteils ca. 75 mm. Die Zweistoffdüse 1 ist an einer Stirnfläche der Mischkammer 3 derart positioniert, dass der aus der Zweistoffdüse austretende Kraftstoff in Richtung auf den sich anschließenden Katalysator geleitet wird. Der Sprühwinkel beträgt 30 %, in Abhängigkeit vom Luftdurchfluss jedoch real zwischen 30 und 90 °. Die mittlere Tröpfchengröße des Kraftstoffs beträgt regelmäßig 15 µm. Die Zuführung für das Wasserdampf-Luft-Gemisch 2 erfolgt über ein 6 mm x 1 mm oder 8 mm x 1 mm Dampfrohr, welches an der Seitenwand des Zylinders positioniert ist, wobei die Zuführung im Inneren der Mischkammer derart ausgerichtet ist, das der Austritt der Zuführung direkt, das bedeutet in einem Winkel von 180 ° ± 2 ° auf die Zweistoffdüse gerichtet ist. Der Abstand der Zweistoffdüse und der Zuführung des Wasserdampf-Luftgemisches beträgt ca. 16,5 mm. Der Anteil der Luft der mit dem Kraftstoff eingeleitet wird beträgt regelmäßig zwischen 50 und 85 %, der Rest wird zusammen mit dem Wasserdampf eingeleitet.

Im Betrieb wird für die Zuführung des Kraftstoff-Luft-Gemisches eine Strömungsgeschwindigkeit von 160 bis 250 m/s an der Düse und für die Wasserdampf/Luftmischung eine Strömungsgeschwindigkeit von ca. 60 bis 90 m/s eingestellt. Die Temperatur der Zweistoffdüse beträgt 80 - 140 ° C.

Beim Zusammentreffen des tröpfchenförmig vorliegenden Kraftstoffes mit dem Wasserdampf kommt es augenblicklich zur vollständigen Verdampfung des Kraftstoffes. Dieser wird mit einer Strömungsgeschwindigkeit von ca. 0,8 m/s bis 1,2 m/s der sich anschließenden Katalysatoreinrichtung 4 zugeführt.

## Patentansprüche

1. Verfahren zum Betreiben einer Mischkammer (3) für einen Reformer, bei dem Kraftstoff verdampft wird, wobei
- der Mischkammer (3) ein Kraftstoff-Luft-Gemisch (C/O) über eine Zweistoffdüse (1) zugeführt wird,
- der Mischkammer (3) ein Wasserdampf-Luft-Gemisch (2) über eine weitere Zuführung zugeführt wird,
- das Kraftstoff-Luft-Gemisch (C/O) dem Wasserdampf-Luft-Gemisch (2) entgegenströmt und
- durch eine im Bereich der Zweistoffdüse (1) angeordnete Verjüngung der Mischkammer (3) störende Wirbel verringert werden.

2. Verfahren nach vorhergehendem Anspruch 1, bei dem das Kraftstoff-Luft-Gemisch (C/O) durch die Zweistoffdüse (1) auf Temperaturen zwischen 80 °C und 150 °C erhitzt wird.

3. Verfahren nach einem der vorhergehenden Ansprüche 1 bis 2, bei dem das zugeführte Wasserdampf-Luft-Gemisch (2) eine Temperatur zwischen 350 °C und 540 °C aufweist.

4. Verfahren nach einem der vorhergehenden Ansprüche 1 bis 3, bei dem der Mischkammer (3) das Kraftstoff-Luft-Gemisch (C/O) durch die Zweistoffdüse (1) in axialer Richtung zugeführt wird.

5. Verfahren nach einem der vorhergehenden Ansprüche 1 bis 4, bei dem das Kraftstoff-Luft-Gemisch (C/O) im Verhältnis von 0,41 bis 0,47 eingesetzt wird.

6. Verfahren nach einem der vorhergehenden Ansprüche 1 bis 5, bei dem das Wasserdampf-Luft-Gemisch (2) im Verhältnis von 1,7 bis 1,9 eingesetzt wird.

7. Mischkammer (3) für einen Reformer,
a) die eine zylindrische Form aufweist,
b) mit einer Zufuhrleitung, die an einer Stirnseite der Mischkammer (3) angeordnet ist, und
c) mit einer weiteren seitlichen Zufuhrleitung,
d) wobei die Strömungsrichtung der stirnseitigen Zufuhrleitung und der weiteren Zufuhrleitung axial und gegeneinander gerichtet sind,
***dadurch gekennzeichnet,***
e) **dass** die Zufuhrleitung an der Stirnseite der Mischkammer (3) für die Zuführung eines Kraftstoff-Luft-Gemisches (C/O) über eine zentral an der Stirnseite angeordneten Zweistoffdüse (1) vorgesehen ist,
f) **dass** im Bereich der Zweistoffdüse (1) eine Verjüngung der Mischkammer (3) vorgesehen ist, und
g) **dass** die weitere seitliche Zufuhrleitung für die Zuführung eines Wasserdampf-Luft-Gemisches (2) vorgesehen ist.

8. Mischkammer (3) nach vorhergehendem Anspruch 7, bei der die Strömungsrichtung der Zweistoffdüse (1) an der Stirnseite der Mischkammer (3) und der weiteren Zuführungsleitung für das Wasserdampf-Luft-Gemisch (2) um 180 ° ± 2 ° gegeneinander gerichtet sind.

9. Mischkammer (3) nach einem der vorhergehenden Ansprüche 7 bis 8, bei der die seitliche Zufuhrleitung für das Wasserdampf-Luft-Gemisch (2) von der Seite nahezu senkrecht durch die Zylinderwandung durchgeführt und innerhalb des Zylinders auf die Zweistoffdüse (1) ausgerichtet ist.

## Claims

1. Method of operating a mixing chamber (3) for a reformer, in which fuel is evaporated,
wherein
- a fuel/air mixture (C/O) is supplied to the mixing chamber (3) via a two-component nozzle (1),
- a steam/air mixture (2) is supplied to the mixing chamber (3) via a further supply line,
- the fuel/air mixture (C/O) flows in the opposite direction to the steam/air mixture (2) and
- interfering turbulence is reduced by tapering the mixing chamber (3) in the region of the two-component nozzle (1).

2. Method according to preceding claim 1, in which the fuel/air mixture (C/O) is heated to temperatures of between 80°C and 150°C. by the two-component nozzle (1).

3. Method according to one of the preceding claims 1 to 2, in which the steam/air mixture (2) supplied has a temperature of between 350°C and 540°C.

4. Method according to one of the preceding claims 1 to 3, in which the fuel/air mixture (C/O) is supplied to the mixing chamber (3) in an axial direction by the two-component nozzle (1).

5. Method according to one of the preceding claims 1 to 4, in which the fuel/air mixture (C/O) is used in a ratio of 0.41 to 0.47.

6. Method according to one of the preceding claims 1 to 5, in which the steam/air mixture (2) is used in a ratio of 1.7 to 1.9.

7. Mixing chamber (3) for a reformer,
a) having a cylindrical shape,
b) comprising a supply line arranged on one end face of the mixing chamber (3), and
c) comprising a further lateral supply line,
d) wherein the flow directions of the end supply line and of the further supply line are oriented axially and in opposite directions to one another,
**characterised in that**
e) the supply line on the end face of the mixing chamber (3) is intended for the supply of a fuel/air mixture (C/O) via a two-component nozzle (1) arranged centrally on the end face,
f) the mixing chamber (3) is tapered in the region of the two-component nozzle (1), and
g) the further lateral supply line is intended for the supply of a steam/air mixture (2).

8. Mixing chamber (3) according to preceding claim 7, in which the flow directions of the two-component nozzle (1) on the end face of the mixing chamber (3) and of the further supply line for the steam/air mixture (2) are oriented at an angle of 180° ± 2° relative to one another.

9. Mixing chamber (3) according to one of the preceding claims 7 to 8, in which the lateral supply line for the steam/air mixture (2) is passed almost perpendicularly through the cylinder wall from the side and is aligned with the two-component nozzle (1) within the cylinder.

## Revendications

1. Procédé de fonctionnement d'une chambre de mélange (3) pour un reformeur, où du carburant est évaporé,
dans lequel
- à la chambre de mélange (3) est amené un mélange de carburant et d'air (C/O) par une buse à deux substances (1),
- à la chambre de mélange (3) est amené un mélange de vapeur d'eau et d'air (2) par une autre conduite d'amenée,
- le mélange de carburant et d'air (C/O) s'écoule contre le mélange de vapeur d'eau et d'air (2), et
- des tourbillons parasites sont réduits par un rétrécissement agencé dans la zone de la buse à deux substances (1) de la chambre de mélange (3).

2. Procédé selon la revendication précédente 1, où le mélange de carburant et d'air (C/O) est chauffé par la buse à deux substances (1) à des températures entre 80 °C et 150 °C.

3. Procédé selon l'une des revendications précédentes 1 à 2, où le mélange de vapeur d'eau et d'air amené (2) présente une température entre 350 °C et 540 °C.

4. Procédé selon l'une des revendications précédentes 1 à 3, où le mélange de carburant et d'air (C/O) est amené à la chambre de mélange (3) par la buse à deux substances (1) dans le sens axial.

5. Procédé selon l'une des revendications précédentes 1 à 4, où le mélange de carburant et d'air (C/O) est utilisé dans le rapport de 0,41 à 0,47.

6. Procédé selon l'une des revendications précédentes 1 à 5, où le mélange de vapeur d'eau et d'air (2) est utilisé dans le rapport de 1,7 à 1,9.

7. Chambre de mélange (3) pour un reformeur,
a) qui présente une forme cylindrique,
b) avec une conduite d'amenée qui est agencée sur un côté avant de la chambre de mélange (3), et
c) avec une autre conduite d'amenée latérale,
d) dans laquelle les sens d'écoulement de la conduite d'amenée côté avant et de l'autre conduite d'amenée sont dirigés axialement et l'un contre l'autre, **caractérisée en ce que**
e) la conduite d'amenée est prévue sur le côté avant de la chambre de mélange (3) pour l'amenée d'un mélange de carburant et d'air (C/O) par une buse à deux substances (1) agencée centralement sur le côté avant,
f) un rétrécissement de la chambre de mélange (3) est prévu dans la zone de la buse à deux substances (1), et
g) l'autre conduite d'amenée latérale est prévue pour l'amenée d'un mélange de vapeur d'eau et d'air (2).

8. Chambre de mélange (3) selon la revendication 7 précédente, où les sens d'écoulement de la buse à deux substances (1) sur le côté avant de la chambre de mélange (3) et de l'autre conduite d'amenée pour le mélange de vapeur d'eau et d'air (2) sont tournés de 180° ±2° l'un contre l'autre.

9. Chambre de mélange (3) selon l'une quelconque des revendications 7 à 8, où la conduite d'amenée latérale pour le mélange de vapeur d'eau et d'air (2) passe depuis le côté presque perpendiculairement par la paroi de cylindre et est orientée dans le cylindre vers la buse à deux substances (1).
